# FASCICULE DE BREVET EUROPEEN

(11) **EP 1 895 378 B1**
(45) Date de publication et mention de la délivrance du brevet: **22.02.2017**
(21) Numéro de dépôt: 06119999.8
(22) Date de dépôt: 01.09.2006
(51) Int. Cl.: G05D 16/10, G05D 7/01

(54) **Dispositif de régulation de pression et/ou de débit de gaz sous pression**
Gasdruck- oder Druchflussregelvorrichtung
Pressurised gas flow or pressure regulation device

(43) Date de publication de la demande: 05.03.2008
(73) Titulaire: LUXEMBOURG PATENT COMPANY S.A., 7440 Lintgen (LU)
(72) Inventeur: Risse, Claude, 57310 Bertrange (FR)
(74) Mandataire: Lecomte & Partners

(56) Documents cités:
- FR-A- 1 538 803
- FR-A- 2 329 010
- FR-A- 2 500 186
- FR-A- 2 879 721
- GB-A- 723 874
- US-A- 2 671 463
- US-A- 3 437 109

## Description

### Domaine technique

Cette demande de brevet a trait à un dispositif de régulation de pression et/ou de débit de gaz sous pression, en particulier à un dispositif dit « détendeur » de gaz sous pression. Un tel dispositif est préférentiellement destiné à être monté via une vanne sur une bouteille haute pression. Ce dispositif peut être intégré avec ladite vanne.

### Etat de la technique

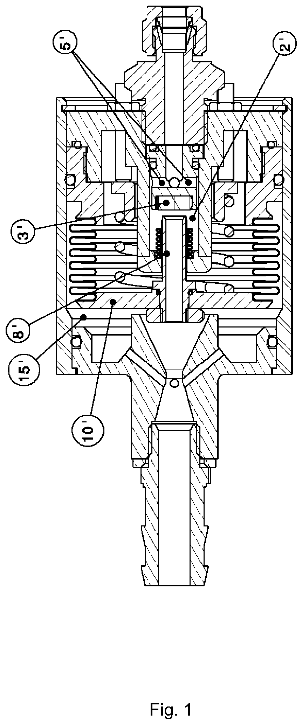

La figure 1 montre un dispositif connu de régulation de pression et/ou de débit de gaz. Le gaz s'écoule de façon générale selon l'axe principal du dispositif. Le gaz sous pression est alimenté à la droite du dispositif et s'écoule dans la chambre haute pression 2' via les ouvertures 5'. Un piston 10' muni d'un soufflet comporte une tige creuse 8' qui s'étend dans la chambre haute pression. L'extrémité de cette tige creuse coopère avec un siège 3' en vue de réguler la pression et/ou le débit de gaz à la sortie. L'autre extrémité de la tige creuse débouche dans une chambre basse pression 15' en communication avec la sortie du régulateur.

Un inconvénient de ce dispositif est que son architecture ne permet pas la mise en place d'un élément diffuseur tel qu'un filtre. De plus, son usinage est assez complexe et coûteux.

US 3911948 divulgue un détendeur de gaz dont la partie détente, c'est-à-dire la partie où le gaz passe de la haute à la basse pression, est relativement compacte. Ce dispositif comporte toutefois l'inconvénient de nécessiter un soin particulier quant à l'étanchéité entre le siège en forme d'anneau et son logement dans le corps du détendeur. Le siège y est effectivement réalisé par assemblage de matériaux différents afin d'assurer une double étanchéité, à savoir entre lui et l'élément d'étranglement ainsi qu'entre lui et son logement dans le corps. Le document FR 2 879 721 divulgue un détendeur de gaz à piston selon le préambule de la revendication 1.

Le problème que se propose de résoudre la présente demande est de proposer un dispositif de régulation de pression et/ou de débit de gaz optimisé, peu coûteux à réaliser et fiable.

### Exposé de l'invention

Le problème mentionné ci avant est résolu par les caractéristiques de la revendication 1.

L'amenée de gaz dans la chambre haute pression par sa périphérie rend l'écoulement gazeux plus diffus. De plus, l'agencement du siège dans la fond de la chambre simplifie la construction du dispositif.

Préférentiellement, le dispositif comporte un élément poreux de forme cylindrique disposé dans la chambre haute pression autour de l'extrémité de la tige s'étendant dans la chambre haute pression afin de filtrer et/ou diffuser le flux de gaz.

Préférentiellement, une extrémité de l'élément poreux est en appui contre le siège et le maintient contre le fond de la chambre haute pression.

Préférentiellement, l'autre extrémité de l'élément poreux est en appui contre un élément rapporté de la chambre haute pression qui comporte la première ouverture de passage de la tige creuse.

Préférentiellement, le siège est logé de façon non étanche dans un alésage formé dans le fond de la chambre haute pression.

### Description sommaire des dessins

La figure 1 montre un dispositif de régulation connu.
La figure 2 montre exemple de dispositif selon l'invention.

### Meilleure manière de réaliser l'invention

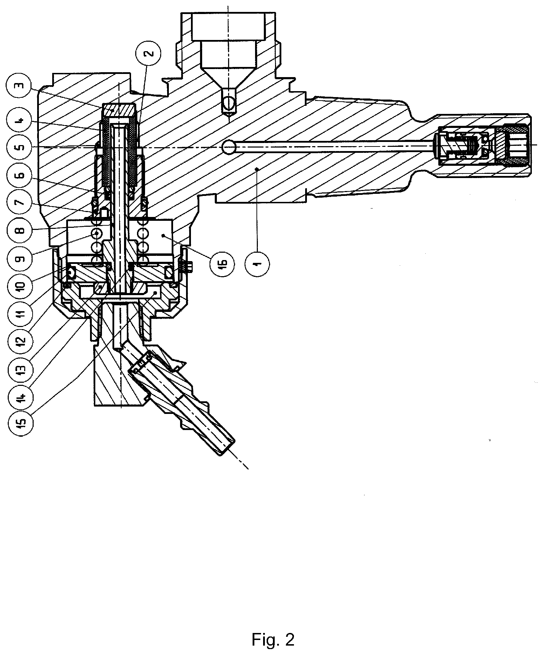

Le dispositif de régulation de la figure 2 est constitué d'un corps 1 comportant une partie inférieure allongée comportant un filetage destiné à être vissé de manière étanche sur une bouteille de gaz contenant un gaz sous pression. Cette partie inférieure est généralement verticale en position de montage sur une bouteille elle-même en position verticale. Cette partie inférieure est percée d'un passage longitudinal pour le gaz et comporte à l'entrée du passage un système de pression résiduelle. Celui-ci ne s'ouvre que lorsque la différence entre la pression en aval et en amont dépasse un seuil prédéterminé. Ceci a pour effet de maintenir une pression résiduelle dans la bouteille une fois vidée tout juste inférieure au seuil prédéterminé et empêche ainsi une contamination de la bouteille par l'atmosphère via le détendeur en position ouverte. Le corps comporte en sa partie centrale un mécanisme de vanne non représenté servant d'ouverture et fermeture du dispositif. Le corps comporte une partie supérieure contenant le mécanisme de régulation proprement dit. Cette partie supérieure comporte essentiellement deux cavités en forme d'alésage, une première assez profonde contient le mécanisme de détente proprement dit, c'est-à-dire là où le flux de gaz est étranglé afin de passer de la haute à la basse pression, et une deuxième cavité concentrique avec la première contient le mécanisme servant à la régulation.

La première cavité définit une chambre haute pression 2 alimentée en gaz haute pression via un passage non représenté entre la périphérie de l'alésage et la vanne non représentée. Ce passage alimente la chambre haute pression 2 via une première ouverture 5. La chambre haute pression comporte en son fond un logement dans lequel est placé un siège 3, communément appelé "pastille". Ce siège est maintenu en place par un élément poreux 4, ou encore filtre, de forme cylindrique lui-même maintenu par un bouchon 7 vissé de façon étanche dans le corps du dispositif, correspondant à une deuxième ouverture de la chambre haute pression. Le design de la chambre haute pression est tel que la périphérie de l'élément poreux est en contact avec le gaz sous pression sur sa périphérie et sur une bonne partie de sa longueur. Une tige creuse coulisse de façon étanche dans un orifice du bouchon 7 et s'étend dans la chambre haute pression, à l'intérieur du filtre cylindrique 4. L'extrémité de la tige creuse 8 coopère avec le siège 3 de sorte à fermer le passage de gaz lorsque que cette extrémité est pressée contre le siège 3. La tige creuse est rigidement liée au piston 10 qui coulisse dans la deuxième cavité. Le piston coulisse de façon étanche dans un alésage réalisé dans la deuxième cavité est divise celle-ci en une chambre 16 en liaison avec l'atmosphère et une chambre basse pression 15. Le piston est soumis à la pression d'un ressort 9 dirigée vers l'extérieur. La tige creuse débouche sur la partie extérieure du piston dans la chambre basse pression 15. Celle-ci est en liaison directe avec la sortie du régulateur.

Le dispositif décrit fonctionne comme suit.

Lorsque la vanne (non représentée) est fermée, le ressort 9 maintient l'ensemble piston - tige creuse dans la position telle que représentée sur la figure, à savoir que le piston 10 est en butée à gauche et que l'extrémité de la tige creuse coopérant avec le siège est à distance du siège. La pression en aval de la vanne (non représentée) correspond à la pression atmosphérique.

Lorsque la vanne (non représentée) est ouverte, la haute pression régnant dans la bouteille s'installe dans la chambre haute pression et du gaz s'écoule entre le siège et l'extrémité de la tige creuse alimentant la chambre basse pression en gaz. Ce débit de gaz a pour effet d'augmenter la pression dans la chambre basse pression, et ceci en fonction également de la caractéristique hydraulique du récepteur (non représenté) relié au régulateur. Cette augmentation de pression a pour effet de déplacer l'ensemble piston-tige creuse vers la droite et de rapprocher l'extrémité de la tige creuse du siège et ainsi de réduire le débit de gaz. La régulation a ainsi lieu.

L'élément poreux ou filtre 4 a pour effet de diffuser et de filtrer le flux de gaz dans la chambre haute pression. Une telle action a pour effet de protéger l'extrémité de la tige ainsi que le siège de détériorations précoces, en particulier lors de débits de fonctionnement importants. Le design du filtre ainsi que son implantation sont particulièrement intéressants car ils autorisent une grande surface de contact entre le gaz sous pression. Ceci a pour effet de réduire les pertes de charges et de protéger le filtre, le siège et la tige des coups de bélier lors de l'ouverture de la vanne. En effet, avant ouverture, la pression atmosphérique règne dans la chambre haute pression. L'ouverture de la vanne (non représentée) provoque un flux de gaz dans le dispositif jusqu'à la sortie et occasionne la fermeture rapide du régulateur. Ceci peut occasionner des coups de bélier entre le siège et la vanne (non représentée). Ces coups de bélier sont particulièrement importants lorsque la sortie du régulateur est fermée (débit nul). Ils peuvent être néfastes pour les éléments filtres ou diffuseurs au point qu'ils peuvent les briser ainsi que pour le siège et la partie de la tige interagissant avec le siège.

Si, contre toute attente, le filtre devait casser, la pastille se verrait plaquée contre l'extrémité de la tige creuse et le détendeur serait fermé. En effet, la pastille n'étant plus tenue par le filtre 4, celle-ci soumise à la haute pression de la bouteille sur toute sa surface à l'exception de la portion de sa surface coopérant avec la tige creuse. Cette portion de surface est soumise à une pression inférieure à la pression bouteille puisque le gaz y est fortement accéléré et ensuite déjà partiellement détendu, la fin de la détente ayant lieu en aval dans la tige creuse. La mise en fermeture du détendeur empêche l'utilisation du détendeur et fournit ainsi à son opérateur une indication claire de défaillance.

La tenue du siège par l'élément 4 rend le montage très facile et ne requiert pas que le siège soit fixé de façon étanche dans son logement. En effet, en fonctionnement, le siège est tout entier dans la haute pression et c'est uniquement avec l'extrémité de la tige creuse 8 qu'il doit coopérer de façon étanche.

Le siège pourrait être tenu par un circlips logé dans une gorge usinée à hauteur de la face avant du siège. Alternativement, le siège pourrait être mis en place par l'extérieur du corps dans un logement ensuite rendu hermétique par vissage d'un bouchon par exemple.

L'usinage du dispositif est rendu plus aisé et donc plus économique. En effet, les deux cavités constituant les chambres haute et basse pression peuvent être usinées sans changer la préhension de la pièce, c'est-à-dire avec précision et à moindre coût.

Dans l'exemple détaillé ci-avant et représenté à la figure 2, le dispositif régulateur est intégré dans le corps de vanne. Ce mode de réalisation n'est pas obligatoire. Le dispositif de régulation peut être indépendant d'un dispositif de vanne auquel il est destiné à être monté.

## Revendications

1. Dispositif de régulation de pression et/ou de débit de gaz sous pression, comprenant
- une chambre haute pression (2) alimentée en gaz sous pression et de forme généralement cylindrique et comportant une première ouverture à une des ses extrémités selon son axe principal et une seconde ouverture (5) servant à l'alimentation en gaz sous pression;
- une chambre basse pression (15) alimentant la sortie du dispositif;
- un piston ou une membrane délimitant la chambre basse pression (15), équipé d'une tige creuse (8) dont une extrémité s'étend dans la chambre haute pression (2) via sa première ouverture afin de coopérer avec un siège (3) logé dans le fond de la chambre haute pression (2) à son extrémité opposée à la première ouverture et dont l'autre extrémité communique avec la chambre basse pression (15) de sorte à créer un passage pour le gaz entre la chambre haute pression (2) et la chambre basse pression (15); **caractérisé en ce que** la chambre haute pression (2) généralement cylindrique est de forme allongée et la seconde ouverture (5) est disposée à sa périphérie à distance du fond de la chambre où est logé le siège (3).

2. Dispositif selon la revendication précédente, **caractérisé en ce qu'**il comporte un élément poreux (4) de forme cylindrique disposé dans la chambre haute pression (2) autour de l'extrémité de la tige (8) s'étendant dans la chambre haute pression (2) afin de filtrer et/ou diffuser le flux de gaz.

3. Dispositif selon la revendication précédente, **caractérisé en ce qu'**une extrémité de l'élément poreux (4) est en appui contre le siège (3) et le maintient contre le fond de la chambre haute pression (2).

4. Dispositif selon la revendication précédente, **caractérisé en ce que** l'autre extrémité de l'élément poreux (4) est en appui contre un élément rapporté (7) de la chambre haute pression (2) qui comporte la première ouverture de passage de la tige creuse (8).

5. Dispositif selon la revendication précédente, **caractérisé en ce que** le siège (3) est logé de façon non étanche dans un alésage formé dans le fond de la chambre haute pression (2).

## Patentansprüche

1. Vorrichtung für die Regelung des Drucks und/oder der Menge eines unter Druck stehenden Gases, bestehend aus:
- einer Hochdruckkammer (2), die mit unter Druck stehendem Gas versorgt wird und eine allgemein zylindrische Form besitzt und eine erste Öffnung an einem ihrer Enden in ihrer Hauptachse und eine zweite Öffnung (5), die zur Versorgung mit dem unter Druck stehenden Gas dient, beinhaltet;
- einer Niederdruckkammer (15), die den Ausgang der Vorrichtung versorgt;
- einem Kolben oder einer Membran, die die Niederdruckkammer (15) begrenzt, ausgerüstet mit einem hohlen Stab (8), dessen eines Ende sich durch die erste Öffnung der Hochdruckkammer (2) hindurch in dieser erstreckt, um mit einem Sitz (3) zusammenzuwirken, der im Boden der Hochdruckkammer (2) an ihrem, der ersten Öffnung entgegengesetzten Ende untergebracht ist und dessen anderes Ende mit der Niederdruckkammer (15) in der Weise kommuniziert, dass ein Durchgang für das Gas zwischen der Hochdruckkammer (2) und der Niederdruckkammer (15) erzeugt wird; **dadurch gekennzeichnet, dass** die allgemein zylindrische Hochdruckkammer (2) eine längliche Form besitzt und die zweite Öffnung (5) an ihrer Peripherie in einigem Abstand vom Boden der Kammer angeordnet ist, in dem der Sitz (3) untergebracht ist.

2. Vorrichtung nach dem voranstehenden Patentanspruch, **dadurch gekennzeichnet, dass** sie ein poröses, zylindrisches Element (4) beinhaltet, das in der Hochdruckkammer (2) um das Ende des Stabes (8) herum angeordnet ist, der sich in der Hochdruckkammer (2) erstreckt, um den Gasstrom zu filtern und/oder zu verteilen.

3. Vorrichtung nach dem voranstehenden Patentanspruch, **dadurch gekennzeichnet, dass** ein Ende des porösen Elements (4) auf dem Sitz (3) aufliegt und gegen den Boden der Hochdruckkammer (2) drückt.

4. Vorrichtung nach dem voranstehenden Patentanspruch, **dadurch gekennzeichnet, dass** das andere Ende des porösen Elements (4) auf einem hervorstehenden Element (7) der Hochdruckkammer (2) aufliegt, das die erste Öffnung für den Durchgang des hohlen Stabs (8) beinhaltet.

5. Vorrichtung nach dem voranstehenden Patentanspruch, **dadurch gekennzeichnet, dass** der Sitz (3) nicht abdichtend in einer Einsenkung untergebracht ist, die im Boden der Hochdruckkammer (2) vorgenommen worden ist.

## Claims

1. Device for regulating pressure and / or gas flow under pressure, comprising:
- a high-pressure chamber (2) supplied with pressurized gas and of generally cylindrical shape and having a first opening at one of its ends along its main axis and a second opening (5) for supplying pressurized gas;
- a low pressure chamber (15) supplying the output of the device;
- a piston or a membrane delimiting the low-pressure chamber (15) equipped with a hollow rod (8), one end of which extends into the high pressure chamber (2) via its first opening in order to cooperate with a seat housed in the bottom of the high pressure chamber (2) at its end opposite to the first opening, and the other end of which communicates with the low pressure chamber (15) so as to create a gas passage between the high pressure chamber (2) and the low pressure chamber (15); **characterized in that** the generally cylindrical high pressure chamber (2) is of elongated shape and the second opening (5) is arranged at its periphery at a distance from the bottom of the chamber where the seat (3) is housed.

2. Device according to claim 1, **characterized in that** it comprises a cylindrical porous element (4) disposed in the high pressure chamber (2) around the end of the rod (8) extending in the chamber (2) in order to filter and/or diffuse the gas flow.

3. Device according to claim 1, wherein one end of the porous element bears against the seat and keeps it against the bottom of the high pressure chamber.

4. Device according to claim 1, **characterized in that** the other end of the porous element (4) bears against an insert (7) of the high-pressure chamber (2) which has the first passage opening of the hollow rod (8).

5. The device as claimed in claim 1, wherein the seat is housed in a non-gas tight manner in a bore formed in the bottom of the high pressure chamber (2).
